# EUROPEAN PATENT APPLICATION

(11) **EP 4 167 572 A1**
(43) Date of publication of application: **19.04.2023**
(21) Application number: 21826618.7
(22) Date of filing: 16.06.2021
(51) Int. Cl.: H04N 19/146

(54) **VIDEO PARTITIONING METHOD, TRANSFER METHOD, SERVER, ADAPTOR AND STORAGE MEDIUM**

(30) Priority: 18.06.2020 CN 202010561781
(71) Applicant: ZTE Corporation, Shenzhen, Guangdong 518057 (CN)
(72) Inventor: XU, Jing, Shenzhen, Guangdong 518057 (CN); WANG, Yongliang, Shenzhen, Guangdong 518057 (CN)
(74) Representative: Canzler & Bergmeier Patentanwälte Partnerschaft mbB
(86) International application number: PCT/CN2021/100298
(87) International publication number: WO 2021/254375

(57) **Abstract**

Provided by the present application are a video partitioning method, a transfer method, a server, an adaptor and a storage medium. The method comprises: according to the bit stream of each sub image block of an encoding file of an original video, generating a corresponding video track to encapsulate the video track into a video file; parsing the video file to obtain video frame position information of each video track; and generating a virtual slicing information file according to the serial number of each sub image block of the encoding file and the video frame position information, and generating a video playback index file according to the serial number of each sub image block.

## Description

### CROSS REFERENCE TO RELATED APPLICATIONS

This application claims priority to the patent application No. 202010561781.7 filed with the Chinese Patent Office on June 18, 2020, the entire contents of which are incorporated hereby by reference.

### TECHNICAL FIELD

The present disclosure relates to, but is not limited to, the field of data processing technology.

### BACKGROUND

The VR (Virtual Reality) video transmission is mainly divided into panoramic video transmission and Field of View (FOV)-based video transmission. With the advent of the 8K era, 8K VR will occupy more than one hundred Mbps bandwidth, and therefore, FOV transmission has become the main choice for VR services. The sub-image tile based transmission in VR FOV transmission is implemented by introducing a motion-constrained tile set (MCTS) in high efficiency video coding (HEVC). The HEVC may split a video image into sub-images, encoding and decoding of which in the video image are independent of each other, to obtain a plurality of sub-image tiles. The FOV transmission scheme based on sub-image tiles guarantees that a user views high-quality VR content while the required bandwidth is reduced, but a large number of sub-image tiles are involved, resulting in severe file fragmentation of the server.

### SUMMARY

The present disclosure provides a video partitioning method, a video transmission method, a server, an adaptor and a storage medium.

The present disclosure provides a video partitioning method, including: generating, according to a bit stream of each sub-image tile of an encoded file of an original video, a corresponding video track, and encapsulating the video track into a video file; parsing the video file to obtain video frame position information of each video track; and generating a virtual slicing information file according to a serial number of each sub-image tile of the encoded file and the video frame position information, and generating a video playback index file according to the serial number of each sub-image tile.

The present disclosure further provides a video transmission method, including: sending, based on a playback service request sent from a terminal, a first download request to a server to acquire a virtual slicing information file and a video playback index file corresponding to the first download request, and sending the video playback index file to the terminal; and acquiring, according to the virtual slicing information file and a second download request sent from the terminal based on the video playback index file, a sub-image video file corresponding to the second download request, and sending the sub-image video file to the terminal; wherein the video playback index file and the virtual slicing information file are obtained through the video partitioning method described above.

The present disclosure further provides a server, including a memory and a processor, wherein the memory is configured to store a computer program; and the processor is configured to execute the computer program and implement any video partitioning method described herein while executing the computer program.

The present disclosure further provides an adaptor, including a memory and a processor, wherein the memory is configured to store a computer program; and the processor is configured to execute the computer program and implement any video transmission method described herein while executing the computer program.

The present disclosure further provides a computer-readable storage medium having one or more programs stored thereon, wherein the one or more programs are executable by one or more processors to implement any video partitioning method described herein or any video transmission method described herein.

### BRIEF DESCRIPTION OF DRAWINGS

FIG. 1 is a schematic flowchart illustrating a video partitioning method according to the present disclosure.
FIG. 2 is a schematic flowchart illustrating a video transmission method according to the present disclosure.
FIG. 3 is a structural block diagram illustrating a server according to the present disclosure.
FIG. 4 is a structural block diagram illustrating an adaptor according to the present disclosure.

### DETAIL DESCRIPTION OF EMBODIMENTS

The technical solution of the present disclosure will be clearly and completely described below with reference to the accompanying drawings. Obviously, the described implementations are merely some of, but not all, the implementations of the present disclosure. All other implementations, which can be derived by those of ordinary skill in the art from the implementations of the present disclosure without making any creative effort, shall fall within the protection scope of the present disclosure.

The flowcharts shown in the figures are merely illustrative, and do not necessarily include all of the contents and operations/steps, nor do they necessarily have to be performed in the order described. For example, some operations/steps may be decomposed, combined or partially combined, so that the actual execution order may be changed according to the actual situation.

The present disclosure provides a video partitioning method, a video transmission method, a server, an adaptor and a storage medium.

Some implementations of the present disclosure are described in detail below with reference to the accompanying drawings. The following implementations and features thereof may be combined with each other without conflict.

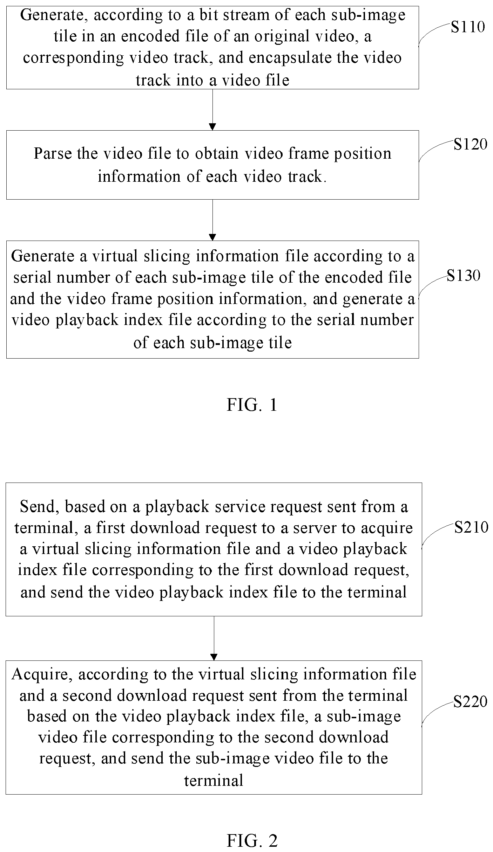

Referring to FIG. 1, FIG. 1 shows a video partitioning method according to the present disclosure.

As shown in FIG. 1, the present disclosure provides a video partitioning method, which may include the following operations S 110 to S130.

At operation S 110, generating, according to a bit stream of each sub-image tile of an encoded file of an original video, a corresponding video track, and encapsulating the video track into a video file.

In this method, an encoded file of the original video file is obtained, where the encoded file includes bit streams of a plurality of sub-image tiles. For example, the original video file is decoded to obtain a corresponding panoramic image, and then the panoramic image is encoded to obtain a corresponding encoded file. A corresponding video track is formed from the bit stream of each sub-image tile. The original video file may be in a format of mp4, flv, f4v, ts, or the like, and the server supports mp4, flv, f4v, ts, and other formats. When the generated video track is obtained, the video track is encapsulated into a new video file.

In an implementation, the encoded file includes a first bitrate encoded file and a second bitrate encoded file; and generating, according to the bit stream of each sub-image tile of the encoded file of the original video, the corresponding video track, and encapsulating the video track into a video file includes: obtaining, according to bit streams of the sub-image tiles in the first bitrate encoded file and the second bitrate encoded file, a sub-video track corresponding to each sub-image tile, and recording a correspondence relationship between the serial number of each sub-image tile in the first bitrate encoded file and the second bitrate encoded file and a corresponding sub-video track; respectively forming, based on the sub-video track corresponding to each sub-image tile, a corresponding first bitrate video track and a corresponding second bitrate video track; and encapsulating the first bitrate video track and the second bitrate video track to obtain the corresponding video file.

Exemplarily, bit streams of the sub-image tiles in the first bitrate encoded file and the second bitrate encoded file are extracted, and a corresponding sub-video track is formed from the bit stream of each sub-image tile. For example, the first bitrate encoded file and the second bitrate encoded file each include bit streams of 16 sub-image tiles, and an extractor track is used for extracting the bit streams of 16 sub-image tiles in the first bitrate encoded file and the bit streams of 16 sub-image tiles in the second bitrate encoded file. After extracting the bit streams of 16 sub-image tiles in the first bitrate encoded file and the bit streams of 16 sub-image tiles in the second bitrate encoded file, the extractor track generates 32 video tracks into each of which the bit stream of a corresponding sub-image tile is placed to generate 32 corresponding sub-video tracks, while recording a correspondence relationship between each sub-image tile and the corresponding sub-video track. For example, the bit streams of 16 sub-image tiles in the first bitrate encoded file are extracted, and serial numbers of the 16 sub-image tiles in the first bitrate encoded file, such as 1, 2, 3 to 16, are recorded. When generating the corresponding video track, the extractor numbers the video track as, for example, track-1, track-2 to track-16, and so on, or track-A, track-B to track-P, and so on. When the bit stream of a sub-image tile 1 is placed into a video track track-1, a correspondence relationship between sub-image tile 1 and track-1 is recorded.

After the sub-video tracks corresponding to the sub-image tiles in the first bitrate encoded file and the sub-video tracks corresponding to the sub-image tiles in the second bitrate encoded file are obtained, the sub-video tracks corresponding to the sub-image tiles in the first bitrate encoded file are combined to obtain the corresponding first bitrate video track, and the sub-video tracks corresponding to the sub-image tiles in the second bitrate encoded file are combined to obtain the corresponding second bitrate video track. For example, when the sub-video tracks corresponding to the sub-image tiles in the first bitrate encoded file are track-1, and track-2 to track-16, the track-1, and the track-2 to track-16 are spliced according to the numbering sequence to obtain the corresponding first bitrate video track. When the sub-video tracks corresponding to the sub-image tiles in the second bitrate encoded file are track-1, and track-2 to track-16, the track-1, and the track-2 to track-16 are spliced according to the numbering sequence to obtain the corresponding second bitrate video track. The first bitrate video track and the second bitrate video track are encapsulated into packets to generate corresponding new video file.

In an implementation, before generating, according to the bit stream of each sub-image tile of the encoded file of the original video, the corresponding video track, the method further includes: decoding the original video to obtain a panoramic image; and encoding, according to a preset HEVC encoder, the panoramic image in an MCTS mode to obtain an encoded file.

Exemplarily, when the original video file is acquired or detected, the original video file is decoded to obtain a panoramic image corresponding to the original video file. For example, the original video file is origin_video.mp4, and is decoded to generate an uncompressed original image origin _video.yuv. The decoding method includes decoding the original video file with a decoder, and the decoder is in the format of an MPEG-2 video decoder, an H264/X264/AVC video decoder, a VC-1 video decoder or the like. When the panoramic image corresponding to the original video file is obtained, encoding is performed on the panoramic image in an MCTS mode based on a preset HEVC encoder to obtain an encoded file corresponding to the original video file. The encoding in the MCTS mode means motion-constraint tile encoding.

In an implementation, encoding, according to the preset HEVC encoder, the panoramic image in the MCTS mode to obtain the encoded file includes: slicing, based on a slicing policy in the preset HEVC encoder, the panoramic image to obtain a plurality of sub-image tiles; and encoding each sub-image tile based on a bitrate parameter in the preset HEVC encoder to obtain an encoded file containing a bit stream of each sub-image tile. The encoded file includes a first bitrate encoded file (or an encoded file in a first bitrate) and a second bitrate encoded file (or an encoded file in a second bitrate), and the first bitrate is greater than the second bitrate.

Exemplarily, the panoramic image is sliced based on a slicing policy in the preset encoder to obtain a plurality of sub-image tiles. For example, the slicing policy in the preset encoder includes a 4 × 4 tile division mode, an 8 × 8 tile division mode, or the like. If the slicing policy in the preset encoder is 4 × 4 tile division mode, the panoramic image is sliced according to the slicing policy of 4 × 4 tile division mode to obtain 8 sub-image tiles, and the serial number of each sub-image tile is recorded. Alternatively, if the slicing policy in the preset encoder is 8 × 8 tile division mode, the panoramic image is sliced according to the slicing policy of 8 × 8 tile division mode to obtain 2 sub-image tiles, and the serial number of each sub-image tile is recorded. Then, each image tile is encoded based on a bitrate parameter in the preset encoder to obtain the corresponding encoded file. The encoded file includes a first bitrate encoded file and a second bitrate encoded file. For example, when the bitrate parameter is 100Mbps, each sub-image tile is encoded by the preset HEVC encoder based on the bitrate parameter of 100Mbps to obtain a corresponding first bitrate encoded file, for example, new_video_100M.h265. Alternatively, when the bitrate parameter is 25Mbps, each sub-image tile is encoded by the preset HEVC encoder based on the bitrate parameter of 25Mbps to obtain a corresponding second bitrate encoded file, for example, new_video_25M.h265, where new_video_100M.h265 is greater than new_video_25M.h265 in size.

At operation S 120, parsing the video file to obtain video frame position information of each video track.

When the video track is encapsulated into the corresponding video file, the video file is parsed to obtain video frame position information of the video track corresponding to each sub-image tile in the video file, where the video frame position information includes a video frame start byte and a byte length. For example, the video file records therein the video frame start byte and byte length of each video track, and the video file is parsed to obtain a video frame start byte 0, a byte length 4000, and the like of video track 1.

In an implementation, parsing the video file to obtain video frame position information of each video track includes: parsing the video file to acquire a correspondence relationship between the serial number of each sub-image tile and sub-video tracks in the first bitrate video track and the second bitrate video track; and obtaining, based on the correspondence relationship between the serial number of each sub-image tile and the corresponding sub-video track, video frame position information of the sub-video track corresponding to the serial number of each sub-image tile in the first bitrate video track or the second bitrate video track.

Exemplarily, the video file is parsed to acquire a correspondence relationship between the serial number of each sub-image tile and corresponding sub-video tracks in the first bitrate video track and the second bitrate video track in the video file. For example, a correspondence relationship between a sub-image tile 1 and a corresponding sub-video track track-1 in the first bitrate video track is obtained, and a correspondence relationship between the sub-image tile 1 and a corresponding sub-video track track-1 in the second bitrate video track is obtained. With the correspondence relationship between the serial number of each sub-image tile and corresponding sub-video tracks in the first bitrate video track and the second bitrate video track in the video file, video frame position information of each sub-video track in the first bitrate video track corresponding to the serial number of each sub-image tile, and video frame position information of each sub-video track in the second bitrate video track corresponding to the serial number of each sub-image tile, are obtained. For example, according to the correspondence relationship between the sub-image tile 1 and track-1 in the first bitrate video track, video frame position information of track-1 is acquired, and according to the correspondence relationship between the sub-image tile 1 and track-1 in the second bitrate video track, video frame position information of track-1 is acquired, where the video frame position information includes a video frame start byte and a byte length.

At operation S130, generating a virtual slicing information file according to a serial number of each sub-image tile of the encoded file and the video frame position information, and generating a video playback index file according to the serial number of each sub-image tile.

After the serial number of the sub-image tile and the video frame position information of the corresponding video track in the video file are obtained, a virtual slicing information file is generated. The virtual slicing information file includes a serial number of each sub-image tile and video frame position information of the video track corresponding to the serial number of each sub-image tile, where the serial number of each sub-image tile and the video frame position information of the video track corresponding to the serial number of each sub-image tile may be stored in the form of a table, a document, or the like. A video playback index file is generated according to the serial number of each sub-image tile. For example, when the serial numbers of the sub-image tiles acquired are the serial numbers of sub-image tile 1 to sub-image tile 16, a corresponding video playback index file is generated, which may be a video playlist and include sub-image tiles 1 to 16. After the virtual slicing information file and the video playback index file are generated, the original video file is deleted to save storage space of the server.

In an implementation, generating the virtual slicing information file according to the serial number of each sub-image and the video frame position information in the encoded file includes: respectively obtaining, according to the serial number of the sub-image tile and the video frame position information, a first bitrate information table and a second bitrate information table; and generating the virtual slicing information file based on the first bitrate information table and the second bitrate information table.

The serial number of each sub-image tile and the corresponding video frame position information are acquired. The serial number of each sub-image tile and the corresponding video frame position information includes a serial number of each sub-image tile and video frame position information of each sub-video track in the first bitrate video track, and a serial number of each sub-image tile and video frame position information of each sub-video track in the second bitrate video track. According to the serial numbers of the sub-image tiles and the video frame position information, a first bitrate information table and a second bitrate information table are respectively obtained. The first bitrate information table is shown below:

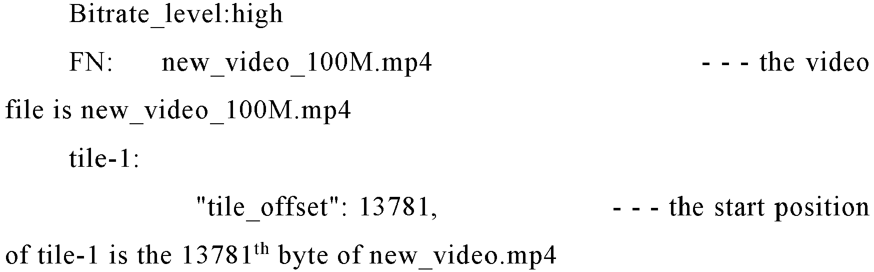

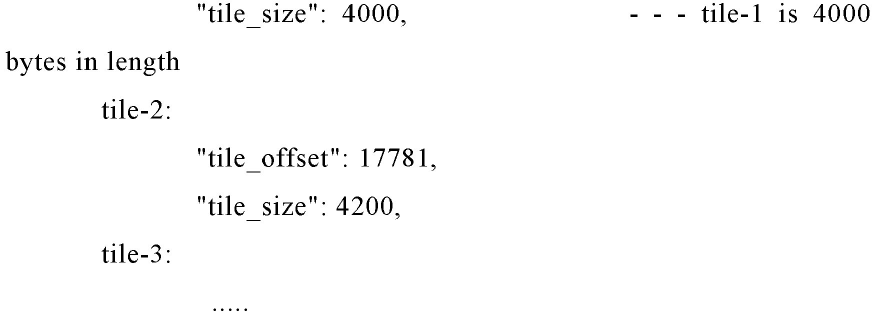

The second bitrate information table is shown below:

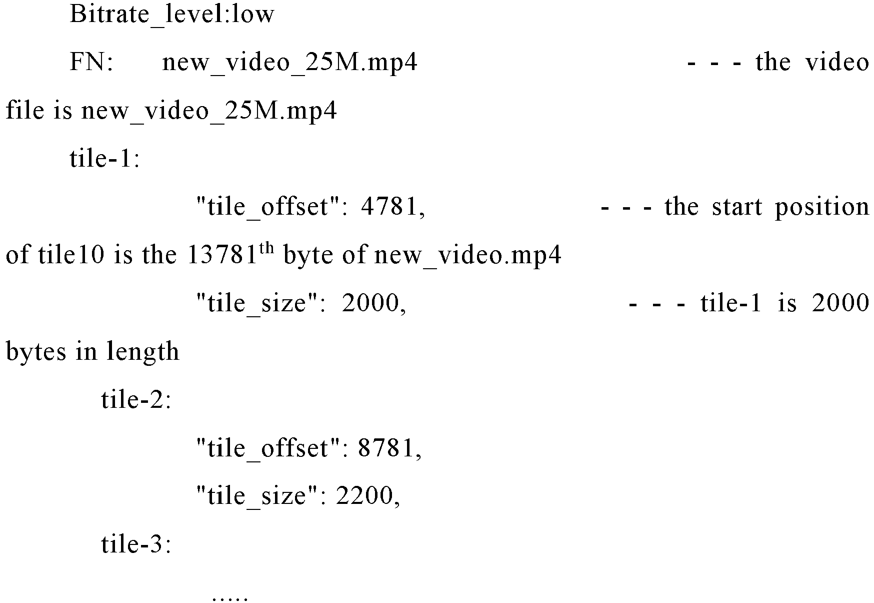

The first bitrate information table includes a serial number of each sub-image tile and a video frame start byte and a video frame byte length corresponding to the serial number of each sub-image tile. For example, the first bitrate information table records that the video frame start byte of the sub-image tile 1 is the 13781^{th} byte and the byte length is 4000. After the first bitrate information table and the second bitrate information are obtained, a virtual slicing information file containing the first bitrate information table and the second bitrate information table is generated based on the first bitrate information table and the second bitrate information table.

In the present disclosure, a corresponding video track is generated from the bit stream of each sub-image tile of the encoded file of the original video file, and encapsulated into a video file, video frame position information of each video track in the video file is acquired, and a virtual slicing information file is generated according to the serial number of each sub-image tile and the video frame position information of each video track in the encoded file, so as to avoid slicing the original video file into sub-images during FOV transmission, which may lead to severe file fragmentation of the server and affect performance of the server. By generating a video playback index file according to the serial number of each sub-image tile, a user may select a corresponding video to browse through a video terminal based on the video playback index file.

FIG. 2 is a schematic flowchart illustrating a video transmission method according to the present disclosure.

As shown in FIG. 2, the present disclosure provides a video transmission method, which may include the following operations S210 and S220.

At operation S210, sending, based on a playback service request sent from a terminal, a first download request to a server to acquire a virtual slicing information file and a video playback index file corresponding to the first download request, and sending the video playback index file to the terminal.

A playback service request sent from the terminal is received, and a first download request is sent to the server based on the playback service request. For example, a user performs an operation on the terminal to send a playback service request corresponding to the operation. The terminal includes a mobile phone, a computer, or any other video playback terminal. When the playback service request is received, a first download request corresponding to the playback service request is acquired. The first download request includes a virtual slicing information file download request and a video playback index file download request. The first download request is sent to a server, and the virtual slicing information file and the video playback index file sent from the server in response to the first download request are received, during which the video playback index file is sent to the terminal so that a user can select a corresponding video file based on the video playback index file.

At operation S220, acquiring, according to the virtual slicing information file and a second download request sent from the terminal based on the video playback index file, a sub-image video file corresponding to the second download request, and sending the sub-image video file to the terminal.

The second download request sent from the terminal based on the video playback index file is received, and according to the second download request and the virtual slicing information file, a video file corresponding to the second download request is acquired. For example, the virtual slicing information file includes at least one video file, and a serial number(s) of the sub-image tile(s) corresponding to the second download request is acquired. Based on the serial number of the sub-image tile, a bitrate information table corresponding to the serial number of the sub-image tile in the virtual slicing information file is acquired. The bitrate information table includes a first bitrate information table and a second bitrate information table. A corresponding video file is acquired according to the bitrate information table, and the acquired video file is sent to the terminal.

In an implementation, according to the virtual slicing information file and a second download request sent from the terminal based on the video playback index file, a sub-image video file corresponding to the second download request is acquired; according to the serial number of the first sub-image tile in the second download request, first video frame position information corresponding to the serial number of the first sub-image tile in the virtual slicing information file is acquired; and according to the first video frame position information, a first sub-image video file corresponding to the serial number of the first sub-image tile is obtained; and/or according to the serial number of the second sub-image tile in the second download request, second video frame position information corresponding to the serial number of the second sub-image tile in the virtual slicing information file is acquired; and according to the second video frame position information, a second sub-image video file corresponding to the serial number of the second sub-image tile is obtained.

A second download request sent from the terminal is received, where the second download request includes a serial number of a first sub-image tile or a serial number of a second sub-image tile associated with the serial number of the first sub-image tile, or a serial number of a first sub-image tile and a serial number of a second sub-image tile. For example, the terminal performs downloading based on a tile video in a main viewing angle area in the video playback index file, and sends the second download request. Since the serial numbers of tiles in the current main viewing angle area are tile-1, tile-2, tile-5 and tile-6, a high bitrate video is to be downloaded, and since the serial numbers of tiles in the non-main viewing angle area are tile-3, tile-4, tile-7 and tile- 8, a low bitrate video is to be downloaded. When the terminal transmits a download request of tile-1 based on the tile video in the main viewing angle area, tile-1 is associated with tile-2, or tile-1 is associated with tile-4, where tile-1 may be associated with serial numbers of a plurality of tiles in the main viewing angle area, and/or may be associated with serial numbers of a plurality of tiles in the non-main viewing angle area.

The serial number of the first sub-image tile and/or the serial number of the second sub-image tile in the second download request are acquired, where the serial number of the second sub-image tile may be the serial number of a tile in the main viewing angle area, and/or the serial number of a tile in the non-main viewing angle area. Based on the serial number of the first sub-image tile and/or the serial number of the second sub-image tile, first video frame position information corresponding to the serial number of the first sub-image tile in the virtual slicing information file, and/or second video frame position information corresponding to the serial number of the second sub-image tile are acquired.

In an implementation, the virtual slicing information file includes a first bitrate information table and a second bitrate information table; and acquiring the first video frame position information corresponding to the serial number of the first sub-image tile in the virtual slicing information file includes: querying the first bitrate information table according to the serial number of the first sub-image tile, to acquire first video frame position information corresponding to the serial number of the first sub-image tile in the first bitrate information table; and acquiring the second video frame position information corresponding to the serial number of the second sub-image tile in the virtual slicing information file includes: querying the first bitrate information table according to the serial number of the second sub-image tile, to acquire second video frame position information corresponding to the serial number of the second sub-image tile in the first bitrate information table; or, querying the second bitrate information table according to the serial number of the second sub-image tile, to acquire second video frame position information corresponding to the serial number of the second sub-image tile in the second bitrate information table.

Exemplarily, the virtual slicing information file includes a first bitrate information table and a second bitrate information table. The first bitrate information table is queried based on the serial number of the first sub-image tile, to acquire first video frame position information corresponding to the serial number of the first sub-image tile in the first bitrate information table. The first bitrate information table is queried based on the serial number of the second sub-image tile, to acquire second video frame position information corresponding to the serial number of the second sub-image tile in the first bitrate information table, or the second bitrate information table is queried based on the serial number of the second sub-image tile, to acquire second video frame position information corresponding to the serial number of the second sub-image tile in the second bitrate information table. For example, when the serial number of the second sub-image tile belongs to serial numbers of tiles in the main viewing angle area, the first bitrate information table is queried. If the serial number of the second sub-image tile belongs to serial numbers of tiles in the non-main viewing angle area, the second bitrate information table is queried. The serial number of a same sub-image tile corresponding to different pieces of video frame position information in the first bitrate information table and the second bitrate information table.

After the first video frame position information corresponding to the serial number of the first sub-image tile and/or the second video frame position information corresponding to the serial number of the second sub-image tile are acquired, a third download request is sent to the server. The third download request includes first video frame position information and second video frame position information, and a first sub-image video file corresponding to the first video frame position information and a second sub-image video file corresponding to the second video frame position information sent from the server in response to the third download request are received.

In an implementation, each of the first video frame position information and the second video frame position information includes a video frame start byte and a byte length; obtaining, according to the first video frame position information, the first sub-image video file corresponding to the serial number of the first sub-image tile includes: acquiring, based on a first video frame start byte and a byte length corresponding to the serial number of the first sub-image tile, first video data corresponding to the serial number of the first sub-image tile; and encapsulating the first video data to obtain a first sub-image video file corresponding to the serial number of the first sub-image tile; obtaining, according to the second video frame position information, the second sub-image video file corresponding to the serial number of the second sub-image tile includes: acquiring, based on a second video frame start byte and a byte length corresponding to the serial number of the second sub-image tile, second video data corresponding to the serial number of the second sub-image tile; and encapsulating the second video data to obtain a second sub-image video file corresponding to the serial number of the second sub-image tile.

Exemplarily, each of the first video frame position information and the second video frame position information includes a video frame start byte and a byte length. According to a first video frame start byte and a byte length corresponding to the serial number of the first sub-image tile, first video data to be downloaded corresponding to the serial number of the first sub-image tile is determined; and/or according to a second video frame start byte and a byte length corresponding to the serial number of the second sub-image tile, second video data to be downloaded corresponding to the serial number of the second sub-image tile is determined. For example, when the serial number of the first sub-image tile corresponds to a video frame start byte at the 13781^{th} byte and a byte length of 4000 bytes, it is determined that the first video data to be downloaded corresponding to the serial number of the first sub-image tile is the data between the 13781^{th} byte and the 17781^{th} byte.

Based on the determined first video data to be downloaded and/or the determined second video data to be downloaded, a third download request is sent to the server. The third download request includes downloading the first video data and/or the second video data. The first video data and/or the second video data sent from the server in response to the third download request are acquired. For example, a third download request is sent to the server to acquire the first video data and/or the second video data. The server, upon receiving the third download request, reads the video data between the 13781^{th} byte and the 17781^{th} byte from a disk as the first video data corresponding to the serial number of the first sub-image tile; or reads the video data between the 4781^{th} byte and the 6781^{th} byte as the second video data corresponding to the serial number of the second sub-image tile. The first video data is first bitrate video data, and when the second video data is second video data corresponding to the serial number of the sub-image tile in the non-main viewing angle area, the second video data is second bitrate video data. The first bitrate video data has a bitrate greater than that of the second bitrate video data.

When the first video data and/or the second video data are obtained, the first video data is encapsulated into a first sub-image video file corresponding to the serial number of the first sub-image tile; and/or the second video data is encapsulated into a second sub-image video file corresponding to the serial number of the second sub-image tile. The first sub-image video file and/or the second sub-image video file are sent to the terminal after being acquired. The first sub-image video file is a first bitrate sub-image video file, and when the second sub-image video file is a second sub-image video file corresponding to the serial number of the sub-image tile in the non-main viewing angle area, the second sub-image video file is a second bitrate sub-image video file. The first bitrate sub-image video file has a bitrate greater than that of the second bitrate sub-image video file.

In the present disclosure, a virtual slicing information file and a video playback index file are acquired through a playback service request sent from the terminal, and a second download request sent from the terminal based on the video playback index file is received. According to the second download request and the virtual slicing information file, a corresponding sub-image video file is sent to the terminal, where the sub-image video file includes a first bitrate sub-image video file and/or a second bitrate sub-image video file. When the method is implemented in FOV transmission, the original video file is prevented from being sliced into a plurality of sub-image video files, which may lead to severe fragmentation of the server. Further, by generating the second download request and the virtual slicing information file, the corresponding first bitrate sub-image video file and/or second bitrate sub-image video file are generated, thereby saving the bandwidth resources.

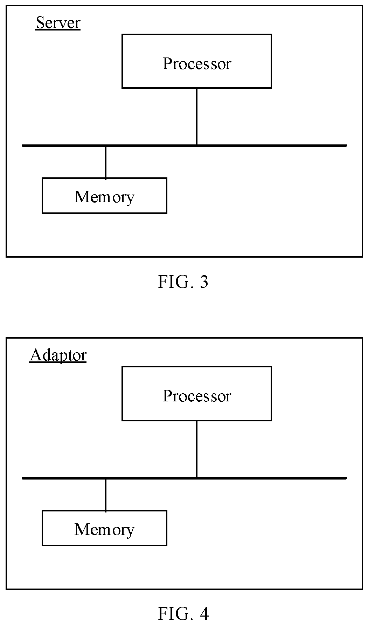

FIG. 3 is a structural block diagram of a server according to the present disclosure.

Exemplarily, the server further includes a processor and a memory. The memory is configured to store a computer program. The processor is configured to execute the computer program and implement the video partitioning method described herein while executing the computer program.

It will be appreciated that the processor may include a central processing unit (CPU), or the processor may include any other general-purpose processor, a digital signal processor (DSP), an application specific integrated circuit (ASIC), a field-programmable gate array (FPGA), or any other programmable logic device, a discrete gate or a transistor logic device, a discrete hardware component, or the like. The general-purpose processor may be a microprocessor, or the processor may be any conventional processor or the like.

FIG. 4 is a structural block diagram of an adaptor according to the present disclosure. The adaptor may be configured at a terminal or a server.

Exemplarily, the adaptor further includes a processor and a memory. The memory is configured to store a computer program. The processor is configured to execute the computer program and implement the video transmission method described herein while executing the computer program.

It will be appreciated that the processor may include a central processing unit (CPU), or the processor may include any other general-purpose processor, a digital signal processor (DSP), an application specific integrated circuit (ASIC), a field-programmable gate array (FPGA), or any other programmable logic device, a discrete gate or a transistor logic device, a discrete hardware component, or the like. The general-purpose processor may be a microprocessor, or the processor may be any conventional processor or the like.

The present disclosure further provides a computer-readable storage medium storing a computer program thereon which, when executed by a processor, causes the processor to implement any video partitioning method or any video transmission methods described herein.

Those of ordinary skill in the art will appreciate that all or some operations of the above described method, functional modules/units in the system and apparatus may be implemented as software, firmware, hardware, and suitable combinations thereof. In a hardware implementation, the division between the functional modules/units mentioned in the above description does not necessarily correspond to the division of physical components; for example, one physical component may have multiple functions, or one function or operation may be performed cooperatively by several physical components. Some or all physical components may be implemented as software executed by a processor, such as a CPU, a digital signal processor or microprocessor, or implemented as hardware, or implemented as an integrated circuit, such as an application specific integrated circuit. Such software may be distributed on a computer-readable storage medium which may include a computer-readable storage medium (or non-transitory medium) or a communication medium (or transitory medium).

The term computer-readable storage medium includes volatile and nonvolatile, removable and non-removable media implemented in any method or technology for storage of information such as computer-readable instructions, data structures, program modules or other data, as is well known to those of ordinary skill in the art. The computer-readable storage medium includes, but is not limited to, RAM, ROM, EEPROM, flash memory or other memory technology, CD-ROM, digital versatile disc (DVD) or other optical disc storage, magnetic cartridge, magnetic tape, magnetic disk storage or other magnetic storage devices, or may be any other medium used for storing the desired information and accessible by a computer. Moreover, it is well known to those ordinary skilled in the art that a communication medium typically includes a computer-readable instruction, a data structure, a program module, or other data in a modulated data signal, such as a carrier wave or other transport mechanism, and may include any information delivery medium.

Exemplarily, the computer-readable storage medium may be an internal storage unit of the electronic device in the foregoing implementation, such as a hard disk or a memory of the electronic device. The computer-readable storage medium may also be an external storage device of the electronic device, such as a plug-in hard disk equipped on the electronic device, a smart media card (SMC), a secure digital (SD) card, a flash card, or the like.

The present disclosure provides a video partitioning method, a video transmission method, a server, an adaptor and a storage medium, the method including generating, according to a bit stream of each sub-image tile of an encoded file of an original video, a corresponding video track, and encapsulating the video track into a video file; parsing the video file to obtain video frame position information of each video track; and generating a virtual slicing information file according to a serial number of each sub-image tile of the encoded file and the video frame position information, and generating a video playback index file according to the serial number of each sub-image tile. As can be seen, the technical solution of the present disclosure, by generating the corresponding virtual slicing information file from the sub-image information in the original video, implements FOV transmission, and avoids severe fragmentation of the server caused by generation of sub-image tiles.

The above are merely exemplary implementations of the present disclosure, but the scope of the present disclosure is not limited thereto, and any person skilled in the art can easily conceive various equivalent modifications or substitutions within the technical scope of the present disclosure, and these modifications or substitutions should be covered within the scope of the present disclosure. Therefore, the scope of protection of the present disclosure shall be determined by the scope of the claims.

## Claims

1. A video partitioning method, comprising:
generating, according to a bit stream of each sub-image tile of an encoded file of an original video, a corresponding video track, and encapsulating the video track into a video file;
parsing the video file to obtain video frame position information of each video track; and
generating a virtual slicing information file according to a serial number of each sub-image tile of the encoded file and the video frame position information, and generating a video playback index file according to the serial number of each sub-image tile.

2. The video partitioning method according to claim 1, wherein before generating, according to the bit stream of each sub-image tile of the encoded file of the original video, the corresponding video track, the method further comprises:
decoding the original video to obtain a panoramic image; and
encoding, according to a preset high efficiency video coding (HEVC) encoder, the panoramic image in a motion-constrained tile set (MCTS) mode to obtain the encoded file.

3. The video partitioning method according to claim 2, wherein encoding, according to the preset HEVC encoder, the panoramic image in the MCTS mode to obtain the encoded file comprises:
slicing, based on a slicing policy in the preset HEVC encoder, the panoramic image to obtain a plurality of sub-image tiles; and
encoding each sub-image tile based on a bitrate parameter in the preset HEVC encoder to obtain the encoded file comprising the bit stream of each sub-image tile;
wherein the encoded file comprises a first bitrate encoded file and a second bitrate encoded file, and the first bitrate encoded file is larger than the second bitrate encoded file.

4. The video partitioning method according to claim 1, wherein the encoded file comprises a first bitrate encoded file and a second bitrate encoded file; and generating, according to the bit stream of each sub-image tile of the encoded file of the original video, the corresponding video track, and encapsulating the video track into the video file comprises:
obtaining, according to bit streams of sub-image tiles in the first bitrate encoded file and the second bitrate encoded file, a sub-video track corresponding to each sub-image tile, and recording a correspondence relationship between the serial number of each sub-image tile in the first bitrate encoded file and the second bitrate encoded file and a corresponding sub-video track;
respectively forming, based on the sub-video track corresponding to each sub-image tile, a corresponding first bitrate video track and a corresponding second bitrate video track; and
encapsulating the first bitrate video track and the second bitrate video track to obtain the corresponding video file.

5. The video partitioning method according to claim 4, wherein parsing the video file to obtain video frame position information of each video track comprises:
parsing the video file to acquire a correspondence relationship between the serial number of each sub-image tile and sub-video tracks in the first bitrate video track and the second bitrate video track; and
obtaining, based on the correspondence relationship between the serial number of each sub-image tile and the corresponding sub-video track, the video frame position information of the sub-video track corresponding to the serial number of each sub-image tile in the first bitrate video track and the second bitrate video track.

6. The video partitioning method according to claim 5, wherein generating the virtual slicing information file according to the serial number of each sub-image tile of the encoded file and the video frame position information comprises:
respectively obtaining, according to the serial number of each sub-image tile and the video frame position information, a first bitrate information table and a second bitrate information table; and
generating the virtual slicing information file based on the first bitrate information table and the second bitrate information table.

7. A video transmission method, comprising:
sending, based on a playback service request sent from a terminal, a first download request to a server to acquire a virtual slicing information file and a video playback index file corresponding to the first download request, and sending the video playback index file to the terminal; and
acquiring, according to the virtual slicing information file and a second download request sent from the terminal based on the video playback index file, a sub-image video file corresponding to the second download request, and sending the sub-image video file to the terminal;
wherein the video playback index file and the virtual slicing information file are obtained through the video partitioning method according to any one of claims 1 to 6.

8. The video transmission method according to claim 7, wherein the second download request comprises a serial number of a first sub-image tile and/or a serial number of a second sub-image tile associated with the serial number of the first sub-image tile; and acquiring, according to the virtual slicing information file and the second download request sent from the terminal based on the video playback index file, the sub-image video file corresponding to the second download request comprises:
acquiring, according to the serial number of the first sub-image tile in the second download request, first video frame position information corresponding to the serial number of the first sub-image tile in the virtual slicing information file; and obtaining, according to the first video frame position information, a first sub-image video file corresponding to the serial number of the first sub-image tile; and/or
acquiring, according to the serial number of the second sub-image tile in the second download request, second video frame position information corresponding to the serial number of the second sub-image tile in the virtual slicing information file; and obtaining, according to the second video frame position information, a second sub-image video file corresponding to the serial number of the second sub-image tile.

9. The video transmission method according to claim 8, wherein the virtual slicing information file comprises a first bitrate information table and a second bitrate information table; and acquiring the first video frame position information corresponding to the serial number of the first sub-image tile in the virtual slicing information file comprises:
querying the first bitrate information table according to the serial number of the first sub-image tile, to acquire the first video frame position information corresponding to the serial number of the first sub-image tile in the first bitrate information table; and
acquiring the second video frame position information corresponding to the serial number of the second sub-image tile in the virtual slicing information file comprises:
querying the first bitrate information table according to the serial number of the second sub-image tile, to acquire the second video frame position information corresponding to the serial number of the second sub-image tile in the first bitrate information table; or,
querying the second bitrate information table according to the serial number of the second sub-image tile, to acquire the second video frame position information corresponding to the serial number of the second sub-image tile in the second bitrate information table.

10. The video transmission method according to claim 8, wherein each of the first video frame position information and the second video frame position information comprises a video frame start byte and a byte length; obtaining, according to the first video frame position information, the first sub-image video file corresponding to the serial number of the first sub-image tile comprises:
acquiring, based on a first video frame start byte and a byte length corresponding to the serial number of the first sub-image tile, first video data corresponding to the serial number of the first sub-image tile; and
encapsulating the first video data to obtain the first sub-image video file corresponding to the serial number of the first sub-image tile; and
obtaining, according to the second video frame position information, the second sub-image video file corresponding to the serial number of the second sub-image tile comprises:
acquiring, based on a second video frame start byte and a byte length corresponding to the serial number of the second sub-image tile, second video data corresponding to the serial number of the second sub-image tile; and
encapsulating the second video data to obtain the second sub-image video file corresponding to the serial number of the second sub-image tile.

11. A server, comprising a memory and a processor, wherein the memory is configured to store a computer program; and
the processor is configured to execute the computer program and implement the video partitioning method according to any one of claims 1 to 6 while executing the computer program.

12. An adaptor, comprising a memory and a processor, wherein the memory is configured to store a computer program; and
the processor is configured to execute the computer program and implement the video transmission method according to any one of claims 7 to 10 while executing the computer program.

13. A computer-readable storage medium having one or more programs stored thereon, wherein the one or more programs are executable by one or more processors to implement the video partitioning method according to any one of claims 1 to 6, or the video transmission method according to any one claims 7 to 10.
